# EUROPEAN PATENT SPECIFICATION

(11) **EP 3 357 668 B1**
(45) Date of publication and mention of the grant of the patent: **03.07.2019**
(21) Application number: 18153027.0
(22) Date of filing: 23.01.2018
(51) Int. Cl.: B29C 49/12, B29C 49/58, B29C 49/46, B29C 49/06, B29C 49/36, B29C 49/48

(54) **STRETCH-BLOWING DEVICE IN ASEPTIC CONDITIONS FOR A PREFORM MADE OF THERMOPLASTIC MATERIAL**
STRECKBLASVORRICHTUNG UNTER ASEPTISCHEN BEDINGUNGEN FÜR EINE VORFORM AUS THERMOPLASTISCHEM MATERIAL
DISPOSITIF D'ÉTIRAGE-SOUFFLAGE DANS DES CONDITIONS ASEPTIQUES POUR UNE PRÉFORME EN MATÉRIAU THERMOPLASTIQUE

(30) Priority: 03.02.2017 IT 201700012198
(43) Date of publication of application: 08.08.2018
(73) Proprietor: Gea Procomac S.p.A., 43038 Sala Baganza (PR) (IT)
(72) Inventor: ABELLI, Paolo, 43123 Parma (IT); CALLEGARI, Fabio, 43039 Salsomaggiore Terme (PR) (IT)
(74) Representative: Dondi, Silvia

(56) References cited:
- EP-A1- 2 186 619
- EP-A1- 2 340 157
- JP-A- H05 131 528

## Description

The present invention relates to a stretch-blowing device in aseptic conditions for a preform made of thermoplastic material, for example to be used in a stretch-blowing carousel for forming containers.

As is known, a stretch-blowing carousel comprises a plurality of work stations, in each of which there is a forming mould. Aside from design variations, each mould comprises two half-moulds that reproduce the shape of the sides of the container and a bottom plate that reproduces the shape of the base of the container to be obtained.

The preform, previously heated, is introduced into the mould and the mouth is sealed by a closing member - the "seal" or blowing nozzle - through which compressed air is blown inside the preform itself.

In the initial step of the forming process, the seal sends air into the preform at medium pressure (maximum 15 bar) and, simultaneously, a stretching rod is gradually introduced into the preform until it reaches the bottom. After touching the bottom, the stretching rod continues its linear movement so as to stretch the preform until substantially reaching the desired length of the container to be obtained.

Subsequently, the seal blows air at high pressure (about 40 bar) so as to expand the preform until it adheres to the inner walls of the half-moulds and of the bottom plate. Simultaneously, the stretching rod retracts until it exits from the container.

The reference field for the present invention is the bottling of so-called "sensitive" food products, i.e. products that are particularly sensitive to bacteriological contamination and oxidation, such as, for example, isotonic drinks, juices, nectars, soft drinks, tea, milk-based drinks, coffee-based drinks, etc., for which the prevention of possible microbiological contamination throughout all packaging stages is of fundamental importance.

The Applicant has developed a moulding apparatus for moulding under aseptic conditions, in which the moulding rotary carousel is protected by a microbiological isolation device suitable for defining a controlled-contamination environment, and the movement means for moving the carousel and moulds is located outside of said isolation device (see European Patent EP2246176).

The preliminary sterilisation step involves all the devices that come into contact with the preform subject to forming by stretch-blowing. Among these, the attention is focused here on the stretching rod.

Since the blowing nozzle constitutes a passage channel for contaminants within the preform, the Applicant had to design a stretch-blowing device to be incorporated with the microbiological isolation device.

In such device, protected by European patent EP2340157, the stretching rod is delimited by a casing that defines a chamber which is sealingly closed with respect to the external environment (contaminated) and is movable from the outside.

In particular, the movement of the rod is obtained thanks to the coupling of two magnetic groups: a first magnetic group, external to the casing and activatable for example through a pneumatic cylinder or an electric motor, and a second magnetic group, integrally constrained to the stretching rod. However, the solution just described is not free from problems, mainly connected with structural complexity, which makes maintenance operations laborious and long.

Furthermore, to prevent excessive bulk, the first magnetic group is arranged parallel to the stretching rod. This requires careful management of the moments generated by the forces at stake, i.e. correct alignment of the various axes.

In this context, the technical task underpinning the present invention is to provide a stretch-blowing device in aseptic conditions for a preform made of thermoplastic material, that obviates the drawbacks of the prior art mentioned above.

In particular, it is an object of the present invention to provide a stretch-blowing device in aseptic conditions for a preform made of thermoplastic material, that enables the stretching rod and its housing chamber to be effectively sterilized.

Another object of the present invention is to propose a stretch-blowing device in aseptic conditions for a preform made of thermoplastic material, that is structurally simpler and more compact with respect to the solution just mentioned, and that therefore facilitates maintenance operations. The defined technical task and the specified aims are substantially achieved by a stretch-blowing device in aseptic conditions for a preform made of thermoplastic material, comprising:
- a blowing nozzle applicable on the mouth of the preform, the blowing nozzle being located at least partly in a contamination-controlled environment where the preform is formed by stretch-blowing, said contamination-controlled environment being isolated from an external environment;
- means to inject compressed air into the preform through the blowing nozzle;
- a stretching rod slidably mounted within the blowing nozzle so that a first portion thereof can penetrate inside the preform through the mouth;
- a linear motor comprising a cylindrical stator and a rotor or magnetic shaft, sliding linearly in the stator, the rotor being integrally connected to a second portion of the stretching rod;
- a box-shaped casing formed by the stator and by a plurality of walls that together define a chamber for housing the rotor and the second portion of the stretching rod, the housing chamber being sealingly closed to the external environment, the box-shaped casing having an inlet to introduce a sanitising fluid within the chamber and an outlet to drain the fluid from the chamber,
characterised in that the linear motor has at least one grooved surface facing the inside of the chamber so as to facilitate the flow of the sanitising fluid.

In a first embodiment, the grooved surface corresponds to the inner side surface of a guide member interposed between the stator and the rotor. Preferably, the inner side surface of the guide member has at least one groove having a helicoidal development.

More preferably, the inner side surface of the guide member has a plurality of grooves, each of which has a helicoidal development.

In particular, such grooves have helicoidal developments along the entire length of the guide member.

Preferably, the helicoidal developments of the grooves are distinct, i.e. they do not intersect.

In a second embodiment, the grooved surface corresponds to the side surface of the rotor. Preferably, the side surface of the rotor has at least one groove having a helicoidal development.

More preferably, the side surface of the rotor has a plurality of grooves, each of which has a helicoidal development.

In a third embodiment, the grooved surface corresponds to the side surface of only a first portion of the rotor that is integrally connected to the second portion of the stretching rod.

Preferably, the grooved surface has at least one groove having a helicoidal development.

More preferably, the grooved surface has at least a plurality of grooves, each of which has a helicoidal development.

In a fourth embodiment, the linear motor comprises a first bushing and a second bushing integrally constrained at two opposite ends of the stator. The rotor is linearly slidable inside the bushings.

Each bushing has a grooved inner side surface.

In such embodiment, a gap is afforded between the rotor and the stator (which are spaced out). Further characteristics and advantages of the present invention will more fully emerge from the non-limiting description of a preferred but not exclusive embodiment of a stretch-blowing device in aseptic conditions for a preform made of thermoplastic material, as illustrated in the accompanying drawings, in which:
- figures 1(a), 1(b) and 1(c) illustrate a first embodiment of a stretch-blowing device in aseptic conditions for a preform made of thermoplastic material, in accordance with the present invention, in different operating steps, in a sectional side view;
- figure 2 illustrates a second embodiment of a stretch-blowing device in aseptic conditions for a preform made of thermoplastic material, in accordance with the present invention, in an operating step, in a sectional side view;
- figures 3(a), 3(b) and 3(c) illustrate a part (guide member) of the device of figures 1(a)-1(c) in a perspective, cross section and longitudinal section view, respectively;
- figure 3(d) schematically illustrates the helicoidal paths of the grooves realised in the stator of figure 3(a)-3(c);
- figures 4(a) and 4(b) illustrate a part (rotor with longitudinal grooves) of the device of figure 2, in a perspective view and in cross section, respectively;
- figure 4(c) illustrates a variant of the rotor of figures 4(a) and 4(b), with helicoidal grooves, in perspective view;
- figures 5(a) and 5(b) illustrate a third embodiment of a stretch-blowing device in aseptic conditions for a preform made of plastic material, in accordance with the present invention, in a sanitising step and in an operating step, respectively, in a sectional side view;
- figure 6 illustrates a part (rotor) of the device of figures 5(a)-5(b), in perspective view;
- figure 7 partially illustrates a fourth embodiment of a stretch-blowing device in aseptic conditions for a preform made of thermoplastic material, in accordance with the present invention, in a sectional side view.

With reference to the figures, number 1 indicates a stretch-blowing device in aseptic conditions for a preform 100 made of thermoplastic material. The device 1 comprises a blowing nozzle 2 applicable on the mouth 100a of the preform 100. In the field, the blowing nozzle is also known as a "seal". The blowing nozzle 2 is at least partially in a controlled-contamination environment 3 in which the forming of the preform 100 takes place by stretch-blowing.

In the embodiments described and illustrated herein, the blowing nozzle 2 is entirely inside the controlled-contamination environment 3. However, alternatives are envisaged wherein a part of the blowing nozzle 2 (e.g. its activating means) are located outside the controlled contamination environment 3.

The controlled-contamination environment 3 is isolated, i.e. physically separated, with respect to an external (contaminated) environment 4 through an isolation device. Such isolation device is not the subject matter of the present invention, therefore it will not be further described or illustrated. By way of example, the isolation device described and illustrated in patent EP2246176 can be used.

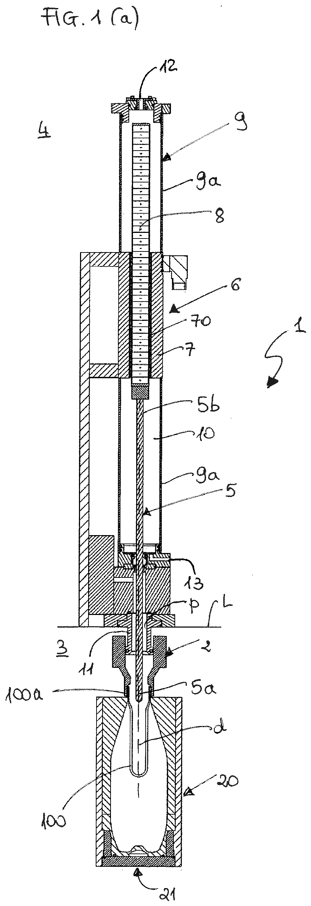

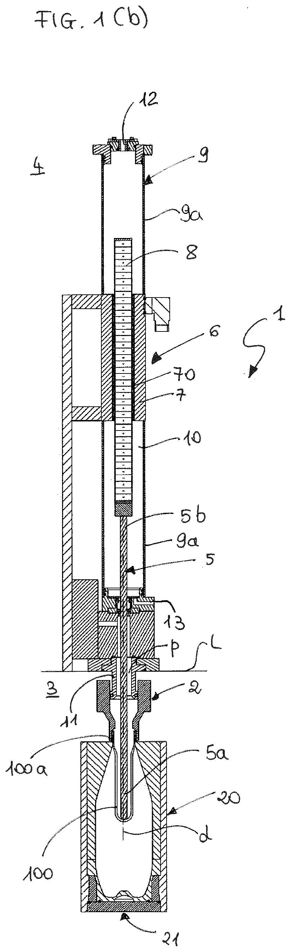

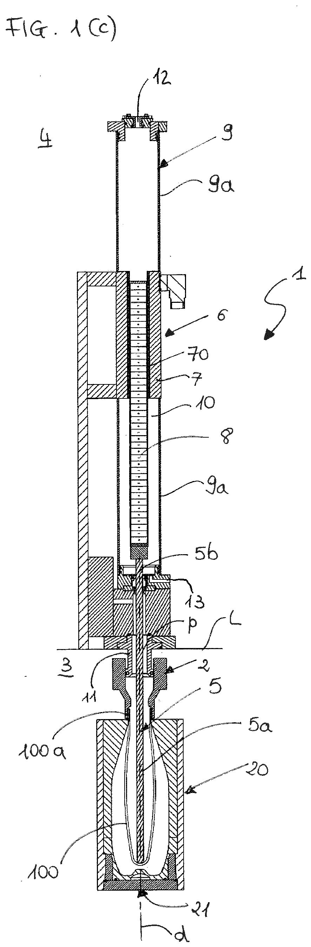

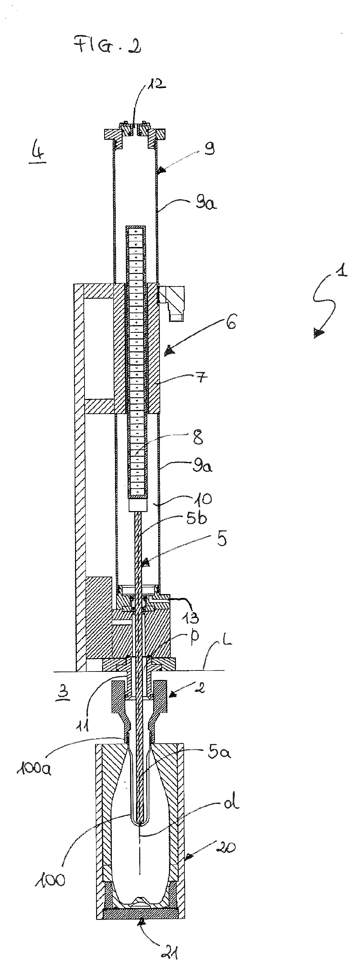

In figures 1 and 2, the separation between the controlled-contamination environment 3 and the external environment is represented schematically by a line L.

The device 1 comprises a means (not illustrated) to inject compressed air into the preform 100 through the blowing nozzle 2.

In particular, such means is configured to inject air at medium pressure (maximum 15 bar) and at high pressure (about 40 bar) into the preform 100.

The device 1 comprises a stretching rod 5 developing along a direction d and slidably mounted within the blowing nozzle 2 so that a first portion 5a thereof can penetrate inside the preform 100 through the mouth 100a. The first portion 5a extends to an end of the stretching rod 5 and comprises such end.

As illustrated in figures 1, 2 and 5, the stretching rod 5 moves through an opening p obtained in the line L separating the controlled-contamination environment 3 and the external environment 4.

The movement of the stretching rod 5 relative to the blowing nozzle 2 (and therefore to the preform 100 below) is governed by a linear motor 6.

The linear motor 6 comprises a cylindrical (primary) stator 7 and a (secondary) rotor or magnetic shaft 8, sliding linearly in the stator 7. As in all linear motors, the stator 7 houses the windings while the rotor 8 houses a plurality of permanent magnets.

The rotor 8 has a cylindrical development and the stator 7 has the shape of a hollow cylinder, coaxial to the rotor 8 and positioned at a predetermined distance from the latter.

Between the rotor 8 and the stator 7 a guide member 70 (also called "bushing") is interposed, substantially having the shape of a hollow cylinder.

For example, the predetermined distance between the inner side surface of the stator 7 and the side surface of the rotor 8 is comprised between 0.5-3 mm. In fact, such distance allows the interposition of the guide member 70.

The rotor 8 has a longer length with respect to the stator 7. Preferably, the rotor 8 has a length that is about twice that of the stator 7.

The rotor 8 is integrally connected to a second portion 5b of the stretching rod 5.

In particular, the second portion 5b of the stretching rod 5 extends to (and comprises) the end of the stretching rod 5 opposite the one that penetrates into the preform 100.

In the embodiments described and illustrated herein, the rotor 8 is fixed to such end of the stretching rod 5.

The device 1 comprises a box-shaped casing 9 that delimits a chamber 10 housing the second portion 5b of the stretching rod 5 and of the rotor 8.

The box-shaped casing 9 is formed by a plurality of walls 9a and by the stator 7 itself. In other words, the stator 7 represents a part of the box-shaped casing 9 delimiting such chamber 10.

Preferably, the walls 9a of the box-shaped casing 9 are made of nonmagnetic material, for example stainless steel.

The box-shaped casing 9 is entirely located in the external environment 4 and is configured so that the chamber 10 is sealingly closed with respect to the external environment 4.

In this way, the stretching rod 5 is prevented from coming into contact with the external environment 4, therefore with possible contaminants.

With respect to the controlled-contamination environment 3, the chamber 10 may be sealed or not.

Preferably, the box-shaped casing 9 is shaped like a tube having a longitudinal development along the same development direction d as the stretching rod 5.

Preferably, the device 1 comprises a sleeve 11 that surrounds the opening p and partially projects into the controlled-contamination environment 3 (where it is fixed to the blowing nozzle 2) and partially into the external environment 4 (where it is fixed directly or indirectly to the box-shaped casing 9).

The stretching rod 5 passes through such sleeve 11.

The box-shaped casing 9 has an inlet 12 to introduce a sanitising fluid within the chamber 10 and an outlet 13 to drain such fluid from the chamber 10.

Preferably, the inlet 12 and the outlet 13 for the sanitising fluid are at two opposite ends of the box-shaped casing 9, with the inlet 12 located in the furthest end from the blowing nozzle 2 (hereinafter indicated as the "upper end" of the box-shaped casing 9) and the outlet 13 located in the closest end to the blowing nozzle 2 (hereinafter indicated as the "lower end" of the box-shaped casing 9). In this way, the inlet 12 is at a greater height with respect to the outlet 13 and the sanitising fluid, once entered, crosses the chamber 10 (and the members contained therein) along its entire longitudinal extension, until being drained through the outlet 13. Advantageously, the linear motor 6 has at least one box-shaped surface 14, 15, 18 that faces the inside of the chamber 10 to facilitate the passage of the sanitising fluid.

In a first embodiment, illustrated in figures 1(a), 1(b) and 1(c), the grooved surface corresponds to the inner side surface 14 of the guide member 70. The inner side surface 14 of the guide member 70 means the inner surface development of the hollow cylinder that constitutes the guide member 70.

For example, the inner side surface 14 of the guide member 70 has at least one groove 16a having a helicoidal development.

Preferably, the inner side surface 14 of the guide member 70 has a plurality of grooves 16a, each of which has a helicoidal development.

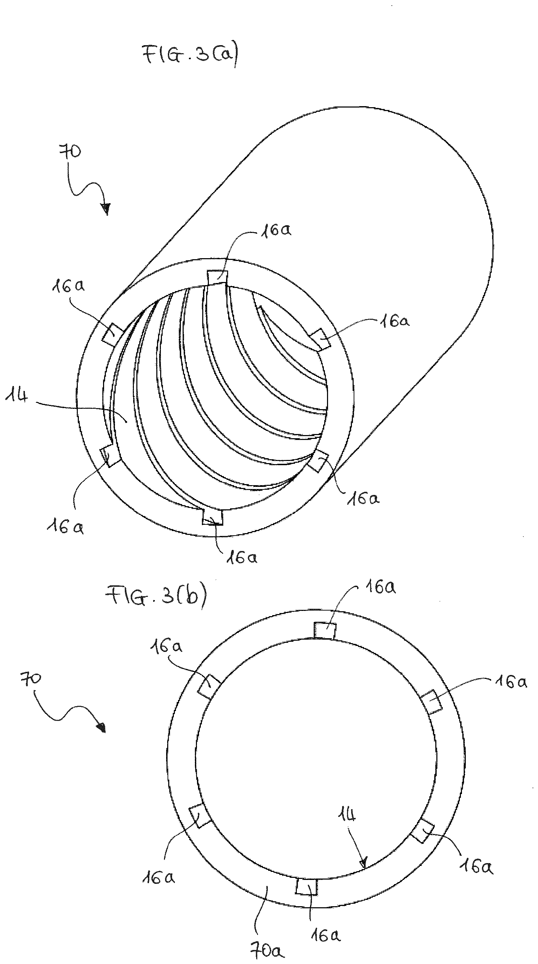

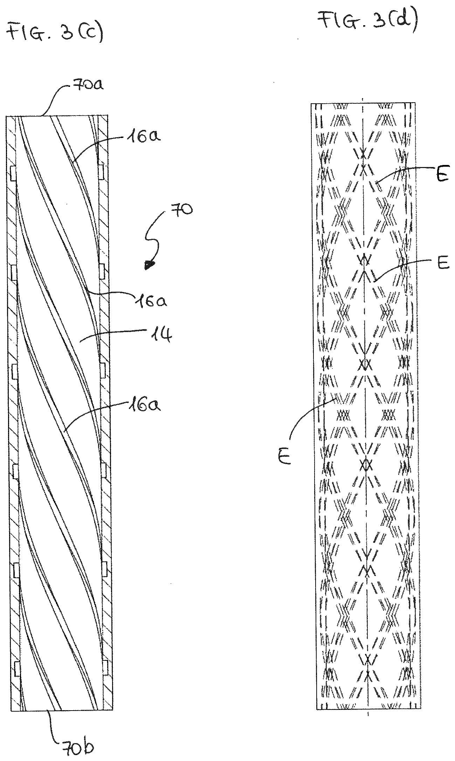

For example, figures 3(a) to 3(d) illustrate a guide member 70 having six grooves 16a that originate from a base 70a of the guide member 70 and have a helicoidal development along the whole length of the latter (in the inner side surface 14) until finishing at the opposite base 70b of the guide member 70 itself.

Each of such grooves 16a is independent from the others, i.e. the grooves 16a develop along distinct helicoidal paths, i.e. they do not intersect. For example, figure 3(d) schematically illustrates the helicoidal paths (indicated with letter E) of the six grooves 16a.

In an alternative (not illustrated), the inner side surface 14 of the guide member 70 has one or more grooves that follow the longitudinal development of the guide member 70.

In a second embodiment, illustrated in figure 2, the grooved surface corresponds to the side surface 15 of the rotor 8. Side surface 15 of the rotor 8 means the surface development of the cylinder that constitutes the rotor 8.

For example, the side surface 15 of the rotor 8 has at least one groove 17a that follows the longitudinal development of the rotor 8.

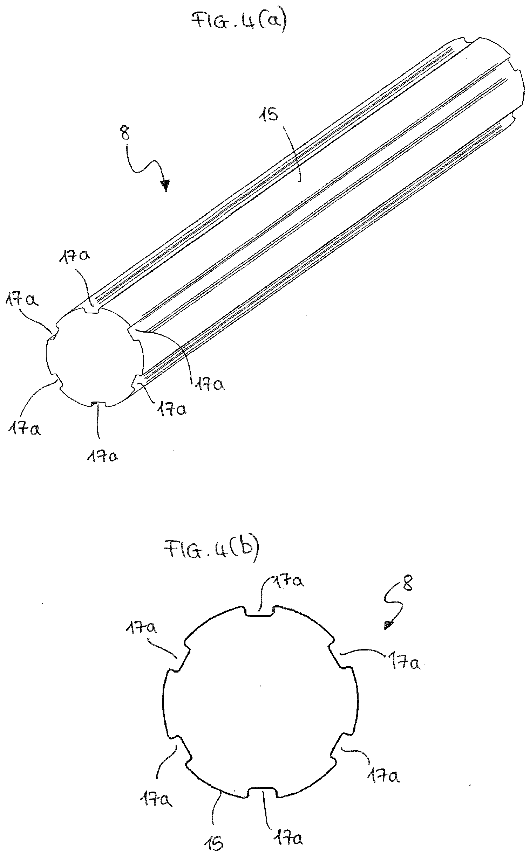

Preferably, the side surface 15 of the rotor 8 has a plurality of parallel grooves 17a that follow the longitudinal development of the rotor 8 (see figure 4a).

Such grooves 17a are parallel to the development direction d of the stretching rod 5.

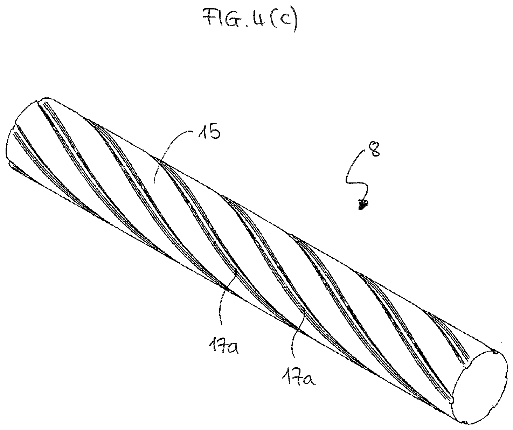

In one alternative, illustrated in figure 4c, the side surface 15 of the rotor 8 has one or more grooves 17a having a helicoidal development.

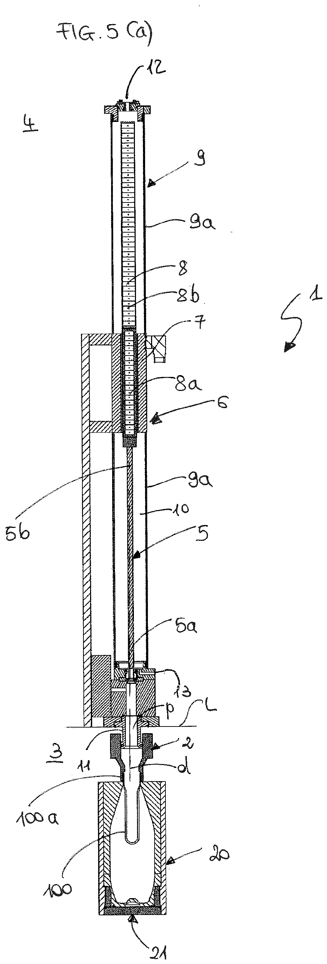

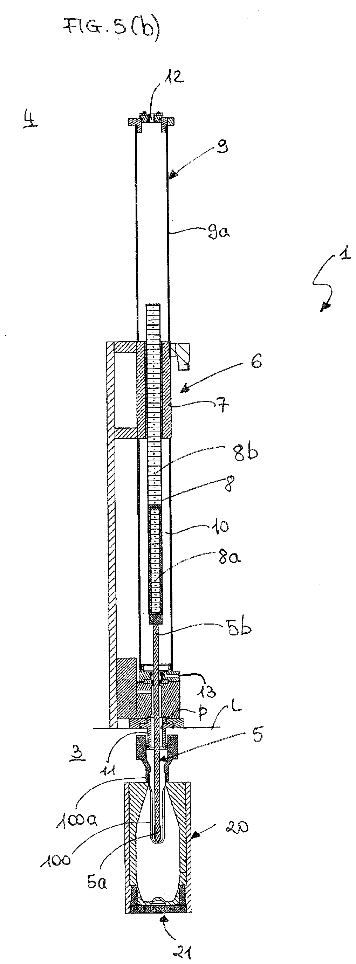

In a third embodiment, illustrated in figures 5(a) and 5(b), the grooved surface corresponds to the side surface 18 of only a first portion 8a of the rotor 8.

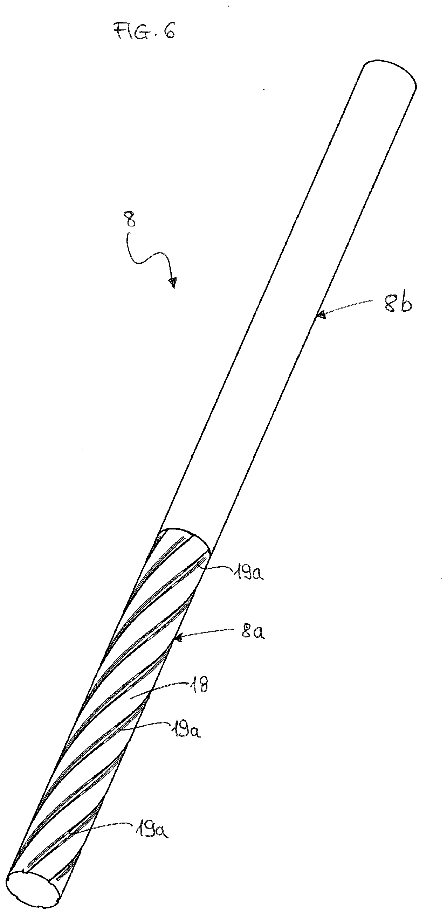

As illustrated in figure 6, the rotor 8 is formed by two portions: a first portion 8a and a second portion 8b. The second portion 8b houses a first group of permanent magnets and has a smooth side surface, i.e. not grooved. The first portion 8a houses a second group of permanent magnets, having a smaller diameter with respect to the permanent magnets of the first group. As mentioned above, the first portion 8a of the rotor 8 has a grooved side surface 18.

The first portion 8a of the rotor 8 is integrally connected to the second portion 5b of the stretching rod 5.

In particular, the grooved surface 18 has at least one groove 19a having a helicoidal development.

Preferably, the grooved surface 18 has a plurality of grooves 19a, each of which has a helicoidal development (see figure 6).

In an alternative (not illustrated), the grooved surface 18 has one or more grooves that follow the longitudinal development of the rotor 8.

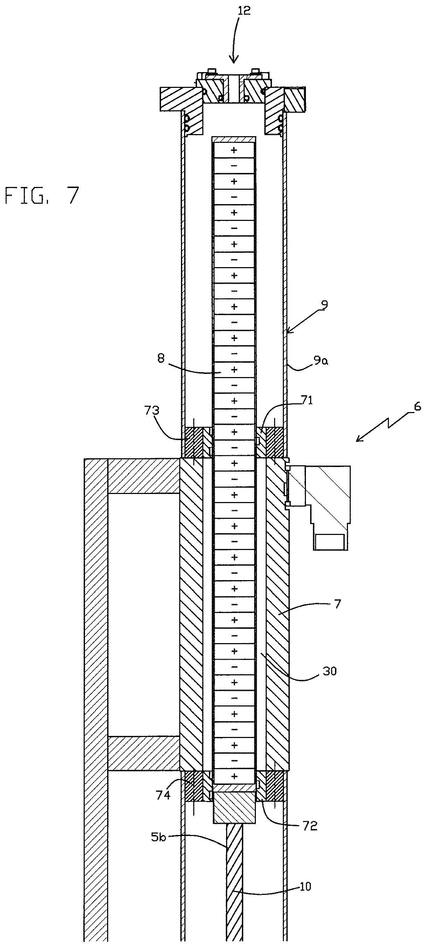

In a fourth embodiment, illustrated in figure 7, the distance between the rotor 8 and the stator 7 is free. In other words, between the rotor 8 and the stator 7 there is an interstice or gap 30.

A first bushing 71 and a second bushing 72 are integrally constrained to the two opposite ends of the stator 7 inside which the rotor 8 is slidably mounted.

Each of the two bushings 71, 72 substantially has the development of a hollow cylinder.

In accordance with this fourth embodiment, two grooved surfaces are provided.

A first grooved surface corresponds to the inner side surface of the first bushing 71.

A second grooved surface corresponds to the inner side surface of the second bushing 72.

By way of example, the following variants are noted for the fourth embodiment:
- each grooved surface has one or more grooves;
- the grooves have a helicoidal development for both bushings 71, 72;
- the grooves have a longitudinal development for both bushings 71, 72;
- the grooves have a helicoidal development for the first bushing 71 and longitudinal for the second bushing 72;
- the grooves have a longitudinal development for the first bushing 71 and helicoidal for the second bushing 72.

Preferably, each of the two bushings 71, 72 is supported by a corresponding support 73, 74 integrally constrained to the stator 7.

The operation of the stretch-blowing device in aseptic conditions for a preform made of thermoplastic material according to the present invention is described below.

The preform 100, previously heated, is inserted in a mould 20 located in the controlled-contamination environment 3 and placed below the corresponding stretch-blowing device 1.

The blowing nozzle 2 is applied on the mouth 100a of the preform 100, as illustrated for example in figure 1(a). The rotor 8 is in a minimum distance configuration with respect to the upper end of the box-shaped casing 9. The air at medium pressure is insufflated into the preform 100 through the blowing nozzle 2, causing a progressive increase in the diameter of the preform 100.

Simultaneously, the electromagnetic field produced by the current that flows in the windings of the stator 7 causes the sliding of the rotor 8 away from the upper end of the box-shaped casing 9. Being integrally constrained to the rotor 8, the stretching rod 5 is gradually inserted into the preform 100 along the entire length of the latter. Therefore, the preform 100 is stretched along the development direction d of the stretching rod 5. From medium pressure there is a transition to the injection of high pressure air into the preform 100, which determines the swelling of the preform 100 such that the latter progressively tends to adhere to the inner walls of the mould 20.

Such steps are illustrated in figures 1(b)-1(c). In particular, figure 1(c) shows that the rotor 8 has reached a maximum distance configuration with respect to the upper end of the box-shaped casing 9, therefore the stretching rod 5 has reached proximity to the bottom plate 21 of the mould 20.

In relation to the first, the second and the fourth embodiment, the chamber 10 housing the stretching rod 5 and the rotor 8 can be sanitised by introducing a sanitising fluid through the inlet 12 of the box-shaped casing 9 during the normal operating cycle of the device 1.

The sanitisation can also be performed as a distinct step with respect to the normal operation of the device 1.

In that case, during sanitisation, the rotor 8 can possibly slow down or stop during its movement, before restarting its stroke. In this way, the sanitisation of contact surfaces is facilitated.

In relation to the third embodiment, instead, during the normal operation of the device 1 the second portion 8b of the rotor 8 enters and exits from the stator 7, while the first portion 8a of the rotor 8 (the grooved one) always remains outside the stator 7, as illustrated for example in figure 5(b).

In that way, the performance of the linear motor 6 during normal operation (stretch-blowing) is excellent since the second portion 8b of the rotor 8 has larger permanent magnets since it does not have grooves.

In this embodiment, the sanitisation cycle is performed separately from the normal operation of the device 1.

In fact, during sanitisation, the first portion 8a of the rotor 8 (the grooved one) is brought inside the stator 7, as illustrated in figure 5(a).

With reference to the first embodiment, the sanitising fluid flows over the rotor 8 and, through the grooves 16a (e.g. of helicoidal development) obtained in the inner side surface 14 of the guide member 70, reaches the stretching rod 5.

With reference to the second embodiment, the sanitising fluid flows over the rotor 8 and, through the grooves 17a (e.g. of helicoidal development) obtained in the inner side surface 15 of the rotor 8, reaches the stretching rod 5.

With reference to the third embodiment, the sanitising fluid flows over the first portion 8a of the rotor 8 and, through the grooves 19a (e.g. of helicoidal development) obtained in the inner side surface 18 of the first portion 8a of the rotor 8, reaches the stretching rod 5.

With reference to the fourth embodiment, the sanitising fluid flows over the rotor 8 and, through the grooves obtained in the inner side surfaces of the two bushings 71, 72, reaches the stretching rod 5.

The sanitising fluid is then drained through the outlet 13 of the box-shaped casing 9.

The characteristics and the advantages of the moulding device for moulding a stretch-blowing device in aseptic conditions for a preform made of thermoplastic material, according to the present invention prove to be clearly indicated in the description provided.

In particular, the use of a linear motor for moving the stretching rod allows the direct driving of the load, avoiding the need to provide motion transformation members, with consequent disadvantages in terms of precision.

Thanks to the integration of the linear motor in the stretching rod protection casing, the device is suitable for aseptic use.

The realisation of grooves in the linear motor, in particular in one of the surfaces facing into the chamber housing the stretching rod, facilitates the passage of sanitising fluid and the cleaning of the surfaces of the motor that are subject to rubbing.

The helicoidal shape of the grooves of the guide member (first embodiment) or of the rotor (second embodiment) represents the optimal choice for sanitisation.

In particular, the guide member with helicoidal grooves (first embodiment) allows the complete sanitisation of the rotor also in the event that its stroke is not double the length of the stator. The rotor with helicoidal grooves (second embodiment) allows the complete sanitisation of the guide member.

On the other hand, the realisation of longitudinal grooves in the guide member (first embodiment) or in the rotor (second embodiment) represents a technically easier and cheaper solution.

The fourth embodiment, with two bushings, is compact and structurally simple to realise.

In the second embodiment, the realisation of helicoidal grooves in the rotor represents the most efficient solution for sanitisation since the rotor translates with respect to the stator during the operation of the device. The sanitising fluid can therefore flow over a more extensive area.

Then, the third embodiment combines the advantage of facilitating sanitisation without compromising the performance of the linear motor during normal operation of the device (stretch-blowing).

## Claims

1. Stretch-blowing device (1) in aseptic conditions for a preform (100) made of thermoplastic material, comprising:
a blowing nozzle (2) applicable on the mouth (100a) of the preform (100), said blowing nozzle (2) being located at least partly in a contamination-controlled environment (3) where the preform (100) is formed by stretch-blowing, said contamination-controlled environment (3) being isolated from an external environment (4);
means to inject compressed air into the preform (100) through said blowing nozzle (2);
a stretching rod (5) slidably mounted within said blowing nozzle (2) so that a first portion (5a) thereof can penetrate inside the preform (100) through the mouth (100a);
a linear motor (6) comprising a cylindrical stator (7) and a rotor or magnetic shaft (8), sliding linearly in said stator (7), said rotor (8) being integrally connected to a second portion (5b) of the stretching rod (5);
a box-shaped casing (9) formed by the stator (7) and by a plurality of walls (9a) that together define a chamber (10) for housing the rotor (8) and the second portion (5b) of the stretching rod (5), said housing chamber (10) being sealingly closed to said external environment (4), said box-shaped casing (9) having an inlet (12) to introduce a sanitising fluid within said chamber (10) and an outlet (13) to drain the fluid from said chamber (10), **characterised in that** the linear motor (6) has at least one grooved surface (14, 15, 18) exposing within said chamber (10) so as to facilitate the flow of the sanitising fluid.

2. Stretch-blowing device (1) according to claim 1, wherein said at least one grooved surface corresponds to the inner side surface (14) of a guide member (70) interposed between the stator (7) and the rotor (8).

3. Stretch-blowing device (1) according to claim 2, wherein the inner side surface (14) of said guide member (70) has at least one groove (16a) having a helicoidal development.

4. Stretch-blowing device (1) according to claim 3, wherein the inner side surface (14) of said guide member (70) has a plurality of grooves (16a), each having a helicoidal development.

5. Stretch-blowing device (1) according to claim 4, wherein said grooves (16a) have helicoidal developments along the entire length of the guide member (70).

6. Stretch-blowing device (1) according to claim 4 or 5, wherein the helicoidal developments of said grooves (16a) are distinct, that is they do not intersect.

7. Stretch-blowing device (1) according to claim 1, wherein said at least one grooved surface corresponds to the side surface (15) of the rotor (8).

8. Stretch-blowing device (1) according to claim 7, wherein said side surface (15) of the rotor (8) has at least one groove (17a) having a helicoidal development.

9. Stretch-blowing device (1) according to claim 8, wherein said side surface (15) of the rotor (8) has a plurality of grooves (17a) each having a helicoidal development.

10. Stretch-blowing device (1) according to claim 1, wherein said at least one grooved surface corresponds to the side surface (18) of only one first portion (8a) of the rotor (8).

11. Stretch-blowing device (1) according to claim 10, wherein said grooved surface (18) has at least one groove (19a) having a helicoidal development.

12. Stretch-blowing device (1) according to claim 11, wherein said grooved surface (18) has at least a plurality of grooves (19a), each having a helicoidal development.

13. Stretch-blowing device (1) according to claims 10-12, wherein the first portion (8a) of the rotor (8) is integrally connected to the second portion (5b) of the stretching rod (5).

14. Stretch-blowing device (1) according to claim 1, wherein said linear motor (6) comprises a first bushing (71) and a second bushing (72) integrally constrained to two opposite ends of said stator (7), each of said bushings (71,72) having a grooved inner side surface, said rotor (8) being linearly slidable within said bushings (71,72).

15. Stretch-blowing device (1) according to claim 14, wherein said rotor (8) and said stator (7) are spaced out, a gap (30) being obtained there between.

## Patentansprüche

1. Streckblasvorrichtung (1) unter aseptischen Bedingungen für eine Vorform (100) aus thermoplastischem Material, umfassend:
eine auf den Mund (100a) der Vorform (100) aufbringbare Blasdüse (2), wobei die Blasdüse (2) sich mindestens teilweise in einer kontaminationskontrollierten Umgebung (3) befindet, in der die Vorform (100) durch Streckblasen gebildet wird, wobei die kontaminationskontrollierte Umgebung (3) von einer äußeren Umgebung (4) isoliert ist;
Mittel zum Einblasen von Druckluft in die Vorform (100) durch die Blasdüse (2);
eine Streckstange (5), die verschiebbar in der Blasdüse (2) montiert ist, so dass ein erster Abschnitt (5a) davon durch den Mund (100a) in die Vorform (100) eindringen kann;
einen Linearmotor (6) umfassend einen zylindrischen Stator (7) und einen Rotor oder eine magnetische Welle (8), die linear in dem Stator (7) gleitet, wobei der Rotor (8) fest mit einem zweiten Abschnitt (5b) der Streckstange (5) verbunden ist;
ein kastenförmiges Gehäuse (9), das durch den Stator (7) und durch eine Vielzahl an Wänden (9a) gebildet ist, die zusammen eine Kammer (10) zum Aufnehmen des Rotors (8) und einen zweiten Abschnitt (5b) der Streckstange (5) definieren, wobei die Aufnahmekammer (10) gegen die äußere Umgebung (4) dicht verschlossen ist, wobei das kastenförmige Gehäuse (9) einen Einlass (12) zum Einleiten eines Desinfektionsfluids in die Kammer (10) und einen Auslass (13) zum Ablassen des Fluids aus der Kammer (10) aufweist, **dadurch gekennzeichnet, dass** der Linearmotor (6) mindestens eine gerillte Oberfläche (14, 15, 18) aufweist, die in der Kammer (10) freiliegend ist, um das Abfließen des Desinfektionsfluids zu erleichtern.

2. Streckblasvorrichtung (1) nach Anspruch 1, wobei die mindestens eine gerillte Oberfläche der Innenseitenfläche (14) eines Führungselements (70) entspricht, das zwischen dem Stator (7) und dem Rotor (8) angeordnet ist.

3. Streckblasvorrichtung (1) nach Anspruch 2, wobei die Innenseitenfläche (14) des Führungselements (70) mindestens eine Rille (16a) aufweist, die eine schraubenförmige Entwicklung aufweist.

4. Streckblasvorrichtung (1) nach Anspruch 3, wobei die Innenseitenfläche (14) des Führungselements (70) eine Vielzahl an Rillen (16a) aufweist, die jeweils eine schraubenförmige Entwicklung aufweisen.

5. Streckblasvorrichtung (1) nach Anspruch 4, wobei die Rillen (16a) über die gesamte Länge des Führungselements (70) schraubenförmige Entwicklungen aufweisen.

6. Streckblasvorrichtung (1) nach Anspruch 4 oder 5, wobei die schraubenförmigen Entwicklungen der Rillen (16a) unterschiedlich sind, das heißt, sie schneiden sich nicht.

7. Streckblasvorrichtung (1) nach Anspruch 1, wobei die mindestens eine gerillte Oberfläche der Seitenfläche (15) des Rotors (8) entspricht.

8. Streckblasvorrichtung (1) nach Anspruch 7, wobei die Seitenfläche (15) des Rotors (8) mindestens eine Rille (17a) aufweist, die eine schraubenförmige Entwicklung aufweist.

9. Streckblasvorrichtung (1) nach Anspruch 8, wobei die Seitenfläche (15) des Rotors (8) eine Vielzahl an Rillen (17a) aufweist, die jeweils eine schraubenförmige Entwicklung aufweisen.

10. Streckblasvorrichtung (1) nach Anspruch 1, wobei die mindestens eine gerillte Oberfläche der Seitenfläche (18) von nur einem ersten Abschnitt (8a) des Rotors (8) entspricht.

11. Streckblasvorrichtung (1) nach Anspruch 10, wobei die gerillte Oberfläche (18) mindestens eine Rille (19a) aufweist, die eine schraubenförmige Entwicklung aufweist.

12. Streckblasvorrichtung (1) nach Anspruch 11, wobei die gerillte Oberfläche (18) mindestens eine Vielzahl an Rillen (19a) aufweist, die jeweils eine schraubenförmige Entwicklung aufweisen.

13. Streckblasvorrichtung (1) nach den Ansprüchen 10-12, wobei der erste Abschnitt (8a) des Rotors (8) fest mit dem zweiten Abschnitt (5b) der Streckstange (5) verbunden ist.

14. Streckblasvorrichtung (1) nach Anspruch 1, wobei der Linearmotor (6) eine erste Buchse (71) und eine zweite Buchse (72) umfasst, die fest an zwei entgegengesetzten Enden des Stators (7) gezwungen sind, wobei jede der Buchsen (71,72) eine gerillte Innenseitenfläche aufweist, wobei der Rotor (8) linear verschiebbar innerhalb dieser Buchsen (71,72) ist.

15. Streckblasvorrichtung (1) nach Anspruch 14, wobei der Rotor (8) und der Stator (7) voneinander beabstandet sind, wobei eine Lücke (30) dazwischen erhalten wird.

## Revendications

1. Dispositif d'étirage-soufflage (1) dans des conditions aseptiques pour une préforme (100) en matériau thermoplastique, comprenant :
une buse de soufflage (2) applicable sur l'orifice (100a) de la préforme (100), ladite buse de soufflage (2) étant placée au moins partiellement dans un environnement à contamination contrôlée (3) où la préforme (100) est réalisée par étirage-soufflage, ledit environnement à contamination contrôlée (3) étant isolé d'un environnement extérieur (4) ;
des moyens pour injecter l'air comprimé dans la préforme (100) par ladite buse de soufflage (2) ;
une tige d'étirage (5) montée de façon coulissante à l'intérieur de ladite buse de soufflage (2) de sorte qu'une première partie (5a) puisse pénétrer à l'intérieur de la préforme (100) par l'orifice (100a) ;
un moteur linéaire (6) comprenant un stator cylindrique (7) et un rotor ou un arbre magnétique (8), coulissant linéairement dans ledit stator (7), ledit rotor (8) étant raccordé intégralement à une seconde partie (5b) de la tige d'étirage (5) ;
une enveloppe en forme de caisson (9) formée par le stator (7) et par une pluralité de parois (9a) qui, ensemble, forment une chambre (10) pour loger le rotor (8) et la seconde partie (5b) de la tige d'étirage (5), ladite chambre de logement (10) étant fermée hermétiquement audit environnement extérieur (4), ladite enveloppe en forme de caisson (9) ayant une entrée (12) pour introduire un fluide désinfectant à l'intérieur de ladite chambre (10) et une sortie (13) pour évacuer le fluide de ladite chambre (10), **caractérisé en ce que** le moteur linéaire (6) présente au moins une surface rainurée (14, 15, 18) se projetant à l'intérieur de ladite chambre (10) de sorte à faciliter l'écoulement du fluide désinfectant.

2. Dispositif d'étirage-soufflage (1) selon la revendication 1, dans lequel ladite au moins une surface rainurée correspond à la surface latérale interne (14) d'un membre de guidage (70) interposé entre le stator (7) et le rotor (8).

3. Dispositif d'étirage-soufflage (1) selon la revendication 2, dans lequel la surface latérale interne (14) dudit membre de guidage (70) présente au moins une rainure (16a) ayant un développement hélicoïdal.

4. Dispositif d'étirage-soufflage (1) selon la revendication 3, dans lequel la surface latérale interne (14) dudit membre de guidage (70) présente une pluralité de rainures (16a) ayant chacune un développement hélicoïdal.

5. Dispositif d'étirage-soufflage (1) selon la revendication 4, dans lequel lesdites rainures (16a) ont des développements hélicoïdaux sur toute la longueur du membre de guidage (70).

6. Dispositif d'étirage-soufflage (1) selon la revendication 4 ou 5, dans lequel les développements hélicoïdaux desdites rainures (16a) sont distincts, à savoir qu'ils ne se coupent pas.

7. Dispositif d'étirage-soufflage (1) selon la revendication 1, dans lequel ladite au moins une surface rainurée correspond à la surface latérale (15) du rotor (8).

8. Dispositif d'étirage-soufflage (1) selon la revendication 7, dans lequel ladite surface latérale (15) du rotor (8) présente au moins une rainure (17a) ayant un développement hélicoïdal.

9. Dispositif d'étirage-soufflage (1) selon la revendication 8, dans lequel ladite surface latérale (15) du rotor (8) présente une pluralité de rainures (17a) ayant chacune un développement hélicoïdal.

10. Dispositif d'étirage-soufflage (1) selon la revendication 1, dans lequel ladite au moins une surface rainurée correspond à la surface latérale (18) de seulement une première partie (8a) du rotor (8).

11. Dispositif d'étirage-soufflage (1) selon la revendication 10, dans lequel ladite surface rainurée (18) présente au moins une rainure (19a) ayant un développement hélicoïdal.

12. Dispositif d'étirage-soufflage (1) selon la revendication 11, dans lequel ladite surface rainurée (18) présente au moins une pluralité de rainures (19a) ayant chacune un développement hélicoïdal.

13. Dispositif d'étirage-soufflage (1) selon les revendications 10-12, dans lequel la première partie (8a) du rotor (8) est raccordée intégralement à la seconde partie (5b) de la tige d'étirage (5).

14. Dispositif d'étirage-soufflage (1) selon la revendication 1, dans lequel ledit moteur linéaire (6) comprend une première bague (71) et une seconde bague (72) intégralement assujetties à deux extrémités opposées dudit stator (7), chacune desdites bagues (71,72) ayant une surface latérale interne rainurée, ledit rotor (8) pouvant coulisser linéairement à l'intérieur desdites bagues (71,72).

15. Dispositif d'étirage-soufflage (1) selon la revendication 14, dans lequel ledit rotor (8) et ledit stator (7) sont espacés, un écart (30) étant obtenu entre eux.
